# EUROPÄISCHE PATENTSCHRIFT

(11) **EP 1 185 541 B1**
(45) Veröffentlichungstag und Bekanntmachung des Hinweises auf die Patenterteilung: **15.01.2003**
(21) Anmeldenummer: 00935039.8
(22) Anmeldetag: 16.05.2000
(51) Int. Cl.: C07F 17/00, C08F 10/00, C08F 4/76, C08F 10/02

(54) **KATALYSATORSYSTEM AUF BASIS VON FULVENVERBINDUNGEN**
CATALYST SYSTEM ON THE BASIS OF FULVENE COMPOUNDS
SYSTEME CATALYSEUR A BASE DE COMPOSES FULVENE

(30) Priorität: 27.05.1999 DE 19924176
(43) Veröffentlichungstag der Anmeldung: 13.03.2002
(73) Patentinhaber: Bayer Aktiengesellschaft, 51368 Leverkusen (DE)
(72) Erfinder: BECKHAUS, Rüdiger, 26131 Oldenburg (DE); HEINRICHS, Jürgen, 46047 Oberhausen (DE); BECKE, Sigurd, 51503 Rösrath (DE); KAHLERT, Steffen, 51061 Köln (DE)
(86) Internationale Anmeldenummer: EP0004425
(87) Internationale Veröffentlichungsnummer: WO00073315

(56) Entgegenhaltungen:
- WO-A-99/24445

## Beschreibung

Die vorliegende Erfindung betrifft ein Katalysatorsystem auf Basis von Fulvenverbindungen, die mit einer Übergangsmetallverbindung in Gegenwart eines Reduktionsmittels umgesetzt und anschließend mit einer Element-H-aciden Verbindung umgesetzt wird, sowie die Verwendung des Katalysatorsystems für die Polymerisation und Copolymerisation von Olefinen und/oder Dienen.

Metallkomplexe mit Cyclopentadienylliganden sind seit der Entdeckung des Ferrocens intensiv untersucht worden. Die Verwendung von Biscyclopentadienyl-Metallkomplexen (Metallocenen), im Gemisch mit aktivierenden Cokatalysatoren, bevorzugt Alumoxanen, zur Polymerisation von Olefinen und Diolefinen ist seit langem bekannt ( z.B. EP-A 69 951, 129 368, 351392, 485 821, 485 823). Die Metallocene haben sich als hoch wirksame, spezifische Katalysatoren bei der Polymerisation von Olefinen erwiesen. Auch Metallkomplexe mit nur einem Cyclopentadienylliganden (Halbsandwichkomplexe) sind in Kombination mit Cokatalysatoren als spezifische Polymerisationskatalysatoren geeignet (US 5132380, EP 416815, WO 91/04257, WO 96/13529). Zur Steigerung der Aktivität, Selektivität, Steuerung der Mikrostruktur, der Molgewichte und der Molgewichtsverteilung wurden daher in den letzten Jahren eine Vielzahl neuer Metallocen-Katalysatoren bzw. Halbsandwich-Katalysatoren für die Polymerisation von olefinischen Verbindungen entwickelt.

Die oben beschriebenen Katalysatorsysteme auf Basis von MAO haben jedoch Nachteile, wie nachfolgend näher erläutert wird. Zum einen lassen sich Aluminoxane, insbesondere MAO, weder in situ, noch in der Präformierung mit hoher Reproduzierbarkeit herstellen. MAO ist ein Gemisch verschiedener Aluminiumalkyl-haltiger Spezies, die miteinander im Gleichgewicht vorliegen. Die Anzahl und die Struktur der in MAO vorkommenden Aluminiumverbindungen ist nicht genau definiert. Daher ist die Polymerisation von Olefinen mit Katalysatorsystemen, die MAO enthalten, nicht immer reproduzierbar. Außerdem ist MAO nicht lagerstabil und verändert seine Zusammensetzung bei thermischer Beanspruchung. Ein schwerwiegender Nachteil ist der hohe Überschuss an MAO, der bei der Aktivierung von Metallocenen nötig ist. Das große MAO/Metallocen-Verhältnis ist eine Voraussetzung, um hohe Katalysatoraktivitäten zu erhalten. Hieraus resultiert ein Verfahrensnachteil, da bei der Aufarbeitung die Aluminiumverbindung vom Polymeren abgetrennt werden muss. MAO ist außerdem ein kostenbestimmender Faktor. Hohe MAO-Überschüsse sind für die technische Anwendung unwirtschaftlich.

Um diese Nachteile zu umgehen, wurden in den vergangenen Jahren Alumoxan-freie Polymerisationskatalysatoren entwickelt. Beispielsweise wird von Jordan et al. in J. Am. Chem. Soc., Vol. 108 (1986), 7410 von einem kationischen Zirconocen-Methylkomplex berichtet, der als Gegenion Tetraphenylborat besitzt und in Methylenchlorid Ethylen polymerisiert. In EP-A 277 003 und EP-A 277 004 werden ionische Metallocene beschrieben, die durch Reaktion von Metallocenen mit ionisierenden Reagenzien hergestellt werden. In EP-A 468 537 werden Katalysatoren mit ionischer Struktur beschrieben, die durch Umsetzung von Metallocendialkylverbindungen mit Tetrakis(pentafluorphenyl)bor-Verbindungen entstehen. Die ionischen Metallocene eignen sich als Katalysatoren zur Polymerisation von Olefinen. Ein Nachteil ist jedoch die große Empfindlichkeit dieser Katalysatoren gegenüber Verunreinigungen, wie z.B. Feuchtigkeit und Sauerstoff. Bei der Durchführung von Polymerisationen müssen daher Vorrichtungen getroffen werden, um eine größtmögliche Reinheit der eingesetzten Monomere und Lösungsmittel zu garantieren. Dies ist technisch sehr aufwendig und teuer.

Um diese Nachteile auszuräumen, werden in EP-A 427 697 und in WO 92/01723 Verfahren zur Polymerisation von Olefinen beschrieben, wobei die Kombination von Metallocendichloriden mit Aluminiumalkylen und Tetrakis(pentafluorphenyl)bor-Verbindungen als Katalysatorsystem eingesetzt wird. Die Kombination aus Metallocenen und Aluminiumalkylen alleine ist als Polymerisationskatalysator nur schwach oder gar nicht aktiv.

Die dem Stand der Technik entsprechenden Verfahren zur Herstellung der ionischen Cyclopentadienyl-Metallkomplexe haben den Nachteil, dass die ionisierenden Reagenzien, z. B. Tetrakis(pentafluorphenyl)bor-Verbindungen teilweise aufwendig zu synthetisieren sind und ihre Verwendung kostenintensiv ist.

Über Metallkomplexe mit Fulvenliganden ist vergleichsweise wenig bekannt.

Nach Bercaw et al., JACS (1972), 94, 1219 entsteht durch Thermolyse von Bis(η⁵pentamethylcyclopentadienyl)titandimethyl der Fulvenkomplex (η⁶-2,3,4,5-Tetramethylcyclopentadienyl-1-methylen)(η⁵-pentamethylcyclopentadienyl)titanmethyl. In Marks et al., JACS (1988), 110, 7701 wird die Thermolyse von Pentamethylcyclopentadienyl-Komplexen des Zirconiums und Hafniums beschrieben. Durch Thermolyse von Bis(η⁵-pentamethylcyclopentadienyl)zirconiumdiphenyl entsteht der Fulvenkomplex (η⁶-2,3,4,5-Tetramethylcyclopentadienyl-1-methylen)(η⁵-pentamethylcyclopentadienyl)zirconiumphenyl.

Ein Verfahren zur thermischen Herstellung von Fulven-Metallkomplexen und deren Verwendung als Polymerisationskatalysatoren in Verbindung mit Cokatalysatoren wird in DE 19 732 804 A1 beschrieben. In einer anderen Anmeldung werden Fulven-Metallkomplexe und ein Verfahren zu deren Herstellung beschrieben (DE-Anmeldung 19 756 742.8). Durch Umsetzung einer Fulvenverbindung mit einem geeigneten Übergangsmetallkomplex in Gegenwart eines Reduktionsmittels sind Fulven-Metallkomplexe in hohen Ausbeuten zugänglich, die nicht nach dem oben beschriebenen thermischen Verfahren hergestellt werden können. Die direkte Einführung des Fulvenliganden ermöglicht den Zugang zu einer Vielzahl von neuen Fulven-Metallkomplexen. In Kombination mit Cokatalysatoren entstehen spezifische Polymerisationskatalysatoren, deren Katalysatoraktivität vergleichbar ist mit der Aktivität von Katalysatoren auf Basis von Metallocenen.

Von Nachteil ist, dass Fulven-Metallkomplexe extrem luft- und feuchtigkeitsempfindlich sind. Daher müssen Fulven-Metallkomplexe unter Inertgasbedingungen hergestellt und aufbewahrt werden.

Aufgabe der vorliegenden Erfindung war es, ein Katalysatorsystem zu finden, das die oben beschriebenen Nachteile wenigstens teilweise vermeidet. Eine weitere Aufgabe bestand darin, stabile Katalysatoren zu finden, die einfach zu synthetisieren und technisch leicht zu handhaben sind und sich ohne Probleme für die Polymerisation insbesondere von olefinischen Verbindungen aktivieren lassen.

Eine weitere Aufgabe bestand darin, Katalysatoren bereitzustellen, die unter geeigneten Umständen mit Aluminiumalkylen aktiviert werden können.

Es wurde nun überraschend gefunden, dass Katalysatoren auf Basis von Fulven-Metallkomplexen in Kombination mit H-aciden Verbindungen, die ein oder mehrere Heteroatome enthalten, sich besonders gut für die gestellten Aufgaben eignen.

Gegenstand der vorliegenden Erfindung ist ein Katalysatorsystem, herstellbar durch Umsetzung
a) einer Fulvenverbindung der Formel (I) 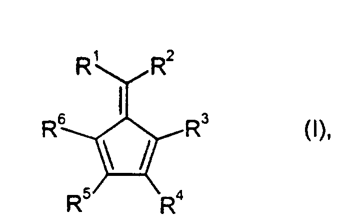 wobei
   - R¹, R², R³, R⁴, R⁵, R⁶: gleich oder verschieden sind und stehen für Wasserstoff, Halogen, eine Cyanogruppe, eine C₁- bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe, eine C₆- bis C₂₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀- Arylalkenylgruppe, eine C₂ bis C₁₀-Alkinylgruppe, eine durch C₁-C₁₀-Kohlenwasserstoffreste substituierte Silylgruppe, eine durch einen C₁-C₁₀-Kohlenwasserstoffrest substituierte Sulfidgruppe, eine gegebenenfalls durch C₁-C₂₀-Kohlenwasserstoffreste substituierte Aminogruppe,
   oder
   - R¹, R², R³, R⁴, R⁵, R⁶: jeweils zusammen mit den sie verbindenden Atomen ein oder mehrere aliphatische oder aromatische Ringsysteme bilden, welche ein oder mehrere Heteroatome, ausgewählt aus der Gruppe (O, N, S) enthalten können und 5 bis 10 Kohlenstoffatome aufweisen,
   mit
b) einer Übergangsmetallverbindung der Formel (II)

   Aₘ(X¹)ₛLₙM¹ (II),

   wobei
   - M¹: ein Metall aus der Gruppe 3, 4, 5, 6 oder der Lanthaniden oder der Actiniden des Periodensystems der Elemente nach IUPAC ist,
   - A: ein gegebenenfalls ein- oder mehrfach verbrückter anionischer Ligand bedeutet,
   - X¹: ein Wasserstoffatom, eine C₁- bis C₁₀-Alkylgruppe, eine C₁- bis C₁₀-Alkoxygruppe, eine C₆- bis C₁₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, eine C₁- bis C₁₀-Kohlenwasserstoffreste substituierte Silylgruppe, ein Halogenatom oder ein Amid der Formel NR⁷₂ bedeutet,
   R⁷ steht für Wasserstoff, eine C₁- bis C₂₀-Alkylgruppe, eine C₆- bis C₂₀-Arylgruppe, eine C₇- bis C₄₀-Arylalkylgruppe, eine C7- bis C₄₀-Alkylarylgruppe, eine durch C₁-C₁₀-Kohlenwasserstoffreste substituierte Silylgruppe, eine gegebenenfalls durch C₁-C₂₀-Kohlenwasserstoffreste substituierte Aminogruppe,
   - L: ein Neutralligand bedeutet,
   - s: die Zahl 2, 3, 4, 5 oder 6 bedeutet,
   - m: die Zahlen 0, 1, 2, 3 oder 4 darstellt, die sich aus der Valenz und dem Bindungszustand von M¹ ergibt, sowie
   - n: eine Zahl von 0 bis 10 ist,
   in Gegenwart eines Reduktionsmittels,
   und anschließender Umsetzung des Produktes mit
c) einer Verbindung der Formel (III)

   R⁸YH (III),
wobei
- R⁸: eine C₁- bis C₃₀-Alkylgruppe, eine gegebenenfalls substituierte C₆bis C₂₀-Arylgruppe, eine C₇- bis C₄₀-Arylalkylgruppe, eine C₇- bis C₄₀-Alkylarylgruppe, eine durch C₁-C₁₀-Kohlenwasserstoffreste substituierte Silylgruppe oder Wasserstoff bedeutet,
- Y: ein Sauerstoffatom, ein Schwefelatom, eine Gruppe der Formel NR⁹, eine Gruppe der Formel PR⁹, oder eine Gruppe der Formel C(R¹⁰)=N bedeutet, wobei R⁹ und R¹⁰ die gleiche Bedeutung wie R⁸ haben.
Als Fulvenverbindungen kommen insbesondere solche der Formel (I) in Frage, in der
- R¹ bis R⁶: für eine C₁-C₂₀-Alkylgruppe, eine C₆-C₂₀-Arylgruppe, eine C₇-C₄₀-Alkylarylgruppe, insbesondere für Wasserstoff, Methyl, Trifluormethyl, Ethyl, n-Propyl, Isopropyl, n-Butyl, Isobutyl, tert.-Butyl, Phenyl, Pentafluorphenyl, Methylphenyl, Cyclohexyl, Benzyl und Dimethylamino steht.

Bevorzugte Verbindungen der Formel (I) sind Fulvenverbindungen der Formel (Ia) 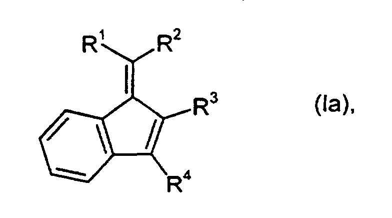 oder Fulvenverbindungen der Formel (Ib) 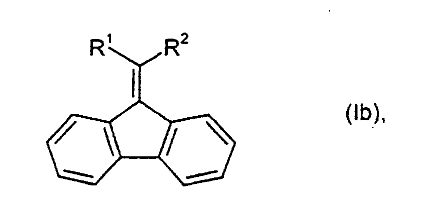 wobei R¹, R², R³ und R⁴ die zuvor genannte Bedeutung besitzen.

Besonders bevorzugte Verbindungen der Formel (I) sind 6-Cyclohexylfulven, 6-Isopropylfulven, 6-tert-Butylfulven, 6-Phenylfulven, 6-(Dimethylamino)-fulven, 6,6-Bis(dimethylamino)fulven, 6,6-Dimethylfulven, 6,6-Bis(trifluormethyl)fulven, 6,6-Diphenylfulven, 6,6-Bis(pentafluorphenyl)fulven, 6,6-Pentamethylenfulven, 6,6-Tetramethylenfulven, 6,6-Trimethylenfulven, 2-(2,4-Cyclopentadien-1-yliden)-1,3-dithiolan, 5-Benzyliden-1,2,3-Triphenyl-1,3-cyclo-pentadien, 1,2,3,4-Tetramethylfulven, 1,2,3,4-Tetraphenylfülven, 2,3-Dimethylfülven, 2,3-Dusopropylfulven, 2,3-Diphenylfulven, 1,4-Dimethyl-2,3-diphenylfulven sowie 1,4-Diethyl-2,3-diphenylfulven.

Die Synthese der Fulvenverbindungen der Formel (I) bzw. (Ia) und (Ib) kann beispielsweise nach J. Org. Chem., Vo. 49, No. 11 (1984), 1849 erfolgen.

Als Übergangsmetallkomplexe der Formel (II) kommen insbesondere solche in Frage, in denen
- M¹: ein Metall aus der Gruppe Titan, Zirkonium, Hafnium, Vanadium, Niob, Tantal und Chrom ist,
- A: ein Pyrazolat der Formel N₂C₃R¹¹₃ ,wobei R¹¹ für Wasserstoff, eine C₁-C₁₀-Alkylgruppe oder eine C₆- bis C₁₀-Arylgruppe steht, ein Pyrazolylborat der Formel R⁷B(N₂C₃R¹¹₃)₃, ein Alkoholat oder Phenolat der Formel OR⁷, ein Siloxan der Formel OSiR⁷₃, ein Thiolat der Formel SR⁷, ein Acetylacetonat der Formel (R⁷CO)₂CR⁷, ein Diimin der Formel (R⁷N=CR⁷)₂, ein Amidinat der Formel R⁷C(NR⁷₂)₂, ein Cyclooctatetraenyl der Formel C₈H_{q}R⁷_{8-q} mit q für 0, 1, 2, 3, 4, 5, 6, 7, wobei R7 die zuvor angegebene Bedeutung hat,
- L: für einen Ether, einen Thioether, einen cyclischen Ether oder cyclischen Thioether, ein Amin oder ein Phosphin steht,
- X¹, R⁷, m, n und s: die zuvor genannte Bedeutung besitzen.

Besonders bevorzugt sind Übergangsmetallkomplexe der Formel (II), in der
- M¹: für Titan, Zirkonium und Hafnium steht,
- X¹: Fluor, Chlor oder Brom bedeutet,
- L: für Diethylether oder Tetrahydrofuran steht
- m: die Zahl 0 darstellt
- s: die Zahlen 2, 3, oder 4 bedeutet und
- n: die Zahlen 0, 1, 2, 3 oder 4 bedeutet.

Als Verbindungen der Formel (III) kommen bevorzugt Verbindungen der Formel (IIIa) in Frage, 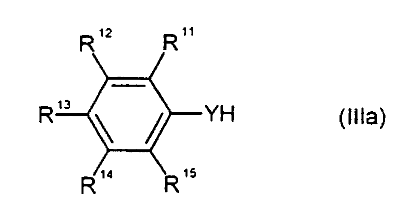 wobei Y die zuvor genannte Bedeutung hat und
- R¹¹, R¹², R¹³, R¹⁴ und R¹⁵: gleich oder verschieden sind und stehen für Wasserstoff, Halogen, eine Cyanogruppe, eine C₁- bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe, eine C₆- bis C₂₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀- Arylalkenylgruppe, eine C₂ bis C₁₀-Alkinylgruppe, eine durch C₁-C₁₀-Kohlenwasserstoffreste substituierte Silylgruppe, eine durch einen C₁-C₁₀-Kohlenwasserstoffrest substituierte Sulfidgruppe, eine gegebenenfalls durch C₁-C₂₀-Kohlenwasserstoffreste substituierte Aminogruppe,
oder
- R¹¹, R¹², R¹³, R¹⁴, R¹⁵: jeweils zusammen mit den sie verbindenden Atomen ein oder mehrere aliphatische oder aromatische Ringsysteme bilden, welche ein oder mehrere Heteroatome, ausgewählt aus der Gruppe (O, N, S) enthalten können und 5 bis 10 Kohlenstoffatome aufweisen,
oder Verbindungen der Formel (IIIb), 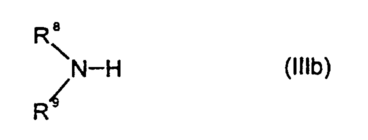 oder Verbindungen der Formel (IIIc), 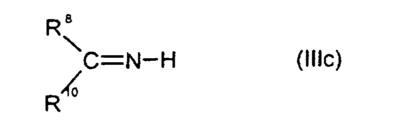 wobei R⁸, R⁹ und R¹⁰ die zuvor angegebene Bedeutung haben, oder R⁸ und R⁹ in Formel (IIIb) zusammen mit dem sie verbindenden Stickstoffatom oder R⁸ und R¹⁰ in Formel (IIIc) mit dem sie verbindenden Kohlenstoffatom ein oder mehrere gegebenenfalls substituierte aliphatische oder aromatische Ringsysyteme bilden, welche ein oder mehrere Heteroatome, ausgewählt aus der Gruppe (O, N, S) enthalten können.

Zu den bevorzugten Verbindungen der Formel (IIIb) gehören primäre Amine, wie z.B. Methylamin, Ethylamin, i-Propylamin, n-Butylamin, tert.-Butylamin, Cyclohexylamin, Trimethylsilylamin, Anilin, Toluidin, oder sekundäre Amine, wie z.B. Dimethylamin, Diethylamin, Di-i-propylamin, Di-n-butylamin, Di-tert.-butylamin, Diphenylamin, Methylphenylamin, tert.-Butylmethylamin, tert.-Butyl-trimethylsilylamin, Bis (trimethylsilyl)amin, N-Methylanilin, oder aliphatische heterocyclische Amine, wie z. B. Pyrrolidin, Piperidin, 2,2,6,6-Tetramethylpiperidin, Piperazin, oder aromatische heterocyclische Amine, wie z. B. Pyrrol, Pyrazol, Imidazol, Indol, Carbazol.

Zu den bevorzugten Verbindungen der Formel (IIIc) gehören Aldimine, wie Acetaldimin, Propionaldimin, Pivalinaldimin, Benzaldimin, oder Ketimine, wie Methyl-tert.-butylketimin, Dicyclohexylketimin und Benzophenonimin.

Besonders bevorzugt sind Verbindungen der Formel (IIIa), wobei Y für ein Sauerstoffatom steht und R⁸ die zuvor genannte Bedeutung hat. Hierzu gehören einwertige Phenole, wie z. B. 1-Naphthol, 2-Naphthol, 1-Phenanthrol, 2-Methyl-phenol (o-Kresol), 4-Methyl-phenol (m-Kresol), 6-Methyl-phenol (p-Kresol), 2-Isopropylphenol, 2,6-Diisopropyl-phenol, 2,6-Di-t-butyl-phenol, 2,6-Di-t-butyl-4-methylphenol (Ionol), Pentafluorphenol, 3,5-Bis(trifluormethyl)phenol, 2-Methoxy-phenol, Guajakol, Anol, 2-Methoxy-4-allyl-phenol (Eugenol), Isoeugenol, Saligenin, Carvacrol, Thymol, 2-Hydroxy-acetophenon, 4-Hydroxy-acetophenon,2-Hydroxydiphenyl, 4-Hydroxy-diphenyl, 2-Cyclohexyl-phenol, 4-Cyclohexyl-phenol, Aminophenol, oder mehrwertige Phenole, wie z. B. Brenzcatechin, Resorcin, Hydrochinon, Pyrogallol, Phloroglucin.

Ein weiterer Gegenstand der Erfindung betrifft ein Verfahren zur Herstellung des Katalysatorsystems. Die Komponenten des erfindungsgemäßen Katalysatorsystems a), b) und c) werden in festgelegter Reihenfolge umgesetzt, wobei zuerst die Komponenten a) und b) miteinander zur Reaktion gebracht werden. Diese Reaktion kann so durchgeführt werden, dass Komponente a) in einem geeigneten Lösungsmittel mit der Komponente b) in Gegenwart eines Reduktionsmittels umgesetzt wird. Das molare Verhältnis von a) zu b) liegt im Bereich von 100:1 bis 0,1:1, bevorzugt von 10:1 bis 0,5:1. Besonders bevorzugt wird Komponente a) mit Komponente b) im molaren Verhältnis 1:1 eingesetzt. Das entstandene Reaktionsprodukt kann isoliert werden und in einem separaten Reaktionsschritt mit Komponente c) in Kontakt gebracht werden. Das molare Verhältnis von b) zu c) liegt bevorzugt im Bereich von 10:1 bis 0,5:1. Besonders bevorzugt wird Komponente b) mit Komponente c) im molaren Verhältnis 1:1 eingesetzt. Auf eine vorhergehende Isolierung des Reaktionsproduktes aus der Umsetzung von Komponente a) mit b) kann gegebenenfalls auch verzichtet werden.

Als Reduktionsmittel sind beispielsweise geeignet Alkalimetalle, Erdalkalimetalle, Aluminium, Zink, Legierungen der Alkalimetalle, wie z. B. Natrium-Kalium-Legierung oder Natriumamalgam, Legierungen der Erdalkalimetalle, sowie Metallhydride. Beispiele fiir Metallhydride sind Lithiumhydrid, Natriumhydrid, Magnesiumhydrid, Aluminiumhydrid, Lithiumaluminiumhydrid und Natriumbor-hydrid. Spezielle Beispiele für Reduktionsmittel sind Natriumnaphthalenid, Kaliumgraphit, Lithiumalkyle, Magnesiumbutadien, Magnesiumanthracen, Trialkylaluminiumverbindungen und Grignardreagenzien. Bevorzugte Reduktions-mittel sind Alkalimetalle oder Erdalkalimetalle, C₁-C₆-Alkyllithium, Tri-C₁-C₆-alkylaluminiumverbindungen und Grignardreagenzien, wie z. B. Ethylmagnesium-chlorid. Besonders bevorzugte Reduktionsmittel sind Lithium, Natriumamalgam, Magnesium, und n-Butyllithium. Anstelle der genannten Reduktionsmittel kann auch eine elektrochemische Reduktion durchgeführt werden.

Der Prozess zur Herstellung des erfindungsgemäßen Katalysatorsystems erfolgt in einem geeigneten Reaktionsmedium bei Temperaturen von -100 bis +250 °C, bevorzugt von -78 bis +130 °C, besonders bevorzugt von -10 bis +60 °C.

Als geeignete Reaktionsmedien kommen beispielsweise aliphatische oder aromatische Kohlenwasserstoffe, halogenierte Kohlenwasserstoffe, Ether und cyclische Ether in Frage. Beispiele hierfür sind unverzweigte aliphatische Kohlenwasserstoffe, wie Butan, Pentan, Hexan, Heptan, Octan, verzweigte aliphatische Kohlenwasserstoffe, wie Isobutan, Isopentan, Isohexan, cyclische aliphatische Kohlenwasserstoffe, wie Cyclohexan, Methylcyclohexan, aromatische Kohlenwasserstoffe, wie Benzol, Toluol und Xylol. Bevorzugt sind Ether wie Dialkylether, Dimethoxyethan und besonders bevorzugt Tetrahydrofuran. Auch Mischungen verschiedener Lösungsmittel sind geeignet.

Die Herstellung des Katalysatorsystems erfolgt unter Ausschluss von Luft und Wasser unter Inertgasbedingungen (Schutzgastechnik). Beispiele für Inertgase sind Stickstoff oder Argon. Als Schutzgastechnik ist beispielsweise die im allgemeinen für metallorganische Substanzen übliche Schlenk-Technik geeignet.

Ein weiterer Gegenstand der vorliegenden Erfindung ist die Verwendung des Katalysatorsystems zur Polymerisation von Olefinen und/oder Dienen. Das erfindungsgemäße Katalysatorsystem kann auch als Hydrierkatalysator eingesetzt werden. Das Katalysatorsystem kann direkt ohne Abtrennung von Nebenprodukten in gelöster Form oder als Feststoff eingesetzt werden. Das Katalysatorsystem kann alleine oder in Kombination mit Cokatalysatoren eingesetzt werden.

Als Cokatalysatoren für Polymerisationen kommen auch die auf dem Gebiet der Metallocen-Katalyse bekannten Cokatalysatoren in Frage, wie polymere oder oligomere Aluminoxane, Lewissäuren sowie Aluminate und Borate. In diesem Zusammenhang wird insbesondere verwiesen auf Macromol. Symp. Vol. 97, Juli 1995, S. 1-246 (für Alumoxane) sowie auf EP 277003, EP 277004, Organometallics 1997, 16, 842-857 (für Borate), und EP 573403 (für Aluminate).

Das molare Verhältnis von Komponente b) des Katalysatorsystems zu Cokatalysator liegt im Bereich von 1:0,1 bis 1: 10000, bevorzugt 1:1 bis 1:1000.

Insbesondere eignen sich als Cokatalysatoren Methylaluminoxan, durch Triisobutylaluminium modifiziertes Methylalumoxan, Isooctylaluminoxan, sowie Diisobutylalumoxan, sowie ionische Verbindungen, die als Anion Tetrakis(pentafluorphenyl)-aluminat enthalten, wie Triphenylmethyl-tetrakis(penta-fluorphenyl)aluminat, sowie N,N-Dimethylanilinium-tetrakis-(pentafluorphenyl)-aluminat sowie ionische Verbindungen, die als Anion Tetrakis-(pentafluorphenyl)-borat enthalten, wie Triphenylmethyl-tetrakis-(pentafluorphenyl)borat, sowie N,N-Dimethylanilinium-tetrakis(pentafluorphenyl)borat.

Zur Aktivierung des Katalysatorsystems sind besonders bevorzugt Cokatalysatoren der Formel (IV) 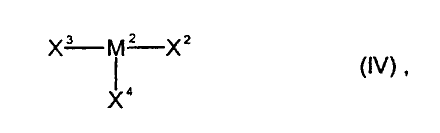 wobei
- M2: ein Element aus der Gruppe 13 des Periodensystems der Elemente nach IUPAC ist und
- X², X³, X⁴: gleich oder verschieden sind und stehen für Wasserstoff, Halogen, eine C₁- bis C₂₀-Alkylgruppe, eine C₁- bis C₁₀-Fluoralkylgruppe, eine C₆bis C₁₀-Fluorarylgruppe, eine C₁- bis C₁₀-Alkoxygruppe, eine C₆- bis C₂₀-Arylgruppe, eine C₆- bis C₂₀-Aryloxygruppe, eine C₇- bis C₄₀-Arylalkylgruppe, oder eine C₇- bis C₄₀-Alkylarylgruppe.

Zu den Verbindungen der Formel (IV) gehören beispielsweise Trialkylaluminiumverbindungen, wie Trimethylaluminium, Triethylaluminium, Triisobutylaluminium, Triisooctylaluminium, darüber hinaus Dialkylaluminium-verbindungen, wie Diisobutylaluminiumhydrid, Diisobutylaluminiumfluorid und Diethylaluminiumchlorid, sowie substituierte Triarylaluminiumverbindungen, wie Tris(pentafluorphenyl)-aluminium, und substituierte Triarylborverbindungen, wie Tris (pentafluorphenyl)bor.

Es können auch Gemische verschiedener Cokatalysatoren eingesetzt werden.

Als Polymerisation wird sowohl die Homo- als auch die Copolymerisation der Olefine und/oder Diene verstanden. Insbesondere werden bei der Polymerisation eingesetzt C₂-C₁₀-Alkene, wie Ethylen, Propylen, Buten-1, Penten-1 und Hexen-1, Octen-1, Isobutylen und Arylalkene, wie Styrol. Als Diene werden insbesondere eingesetzt: konjugierte Diene, wie 1,3-Butadien, Isopren, 1,3-Pentadien, und nicht konjugierte Diene, wie 1,4-Hexadien, 1,5-Heptadien, 7-Methyl-1,6-octadien, 5,7-Dimethyl-1,6-octadien, 4-Vinyl-1-cyclohexen, 5-Ethyliden-2-norbomen, 5-Vinyl-2-norbornen und Dicyclopentadien.

Die erfindungsgemäßen Katalysatoren eignen sich für die Herstellung von Polyethylen und Ethylen(Co)polymeren, insbesondere von Kautschuken auf Basis von Copolymeren des Ethylens mit einem oder mehreren der genannten α-Olefine und der genannten Diene. Darüber hinaus eignet sich das erfindungsgemäße Katalysatorsystem für die Polymerisation von Cyclo-Olefinen wie Norbornen, Cyclopenten, Cyclohexen, Cyclooctan, und der Copolymerisation von Cycloolefinen mit Ethylen oder α-Olefinen. Es können selbstverständlich auch Gemische verschiedener erfindungsgemäßer Katalysatoren eingesetzt werden.

Die Polymerisation kann in flüssiger Phase, in Gegenwart oder Abwesenheit eines inerten Lösungsmittels, oder in der Gasphase durchgeführt werden. Als Lösungsmittel eignen sich aromatische Kohlenwasserstoffe, wie Benzol und/oder Toluol, oder aliphatische Kohlenwasserstoffe, wie Propan, Hexan, Heptan, Octan, Isobutan, Cyclohexan oder Gemische der verschiedenen Kohlenwasserstoffe.

Es ist möglich, das erfindungsgemäße Katalysatorsystem auf einen Träger aufgebracht einzusetzen. Als geeignete Trägermaterialien sind z.B. zu nennen: anorganische oder organische polymere Träger, wie Silica, Zeolithe, Russ, Aktivkohle, Aluminiumoxid, Polystyrol sowie Polypropylen.

Dabei kann das erfindungsgemäße Katalysatorsystem in üblicher Weise auf die Trägermaterialien aufgebracht werden. Methoden zur Trägerung von Katalysatorsystemen sind beispielsweise beschrieben in US 4 808 561, 4 912 075, 5 008 228 und 4 914 253.

Die Polymerisation wird im allgemeinen bei Drücken von 1 bis 1 000, bevorzugt 1 bis 100 bar, und Temperaturen von -100 bis +250°C, bevorzugt 0 bis +150°C, durchgeführt. Die Polymerisation kann in üblichen Reaktoren, kontinuierlich oder diskontinuierlich durchgeführt werden. Die hierbei erhältlichen Polymerisate sind ein weiterer Gegenstand der Erfindung.

Die Erfindung wird anhand der nachstehenden Beispiele näher erläutert.

### Beispiele

Allgemeine Angaben: Herstellung und Handhabung organometallischer Verbindungen erfolgten unter Ausschluss von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert.

Polymercharakterisierung: Die DSC-Messungen erfolgten an einem Gerät der Firma Perkin-Elmer mit der Bezeichnung Differential-Scanning-Calorimeter DSC-2 nach folgender Vorschrift: zwei Aufheizungen -90 °C, bis +180 °C, Heizrate 20K/min, schnelle Abkühlung mit 320K/min auf -90 °C, Stickstoffspülung, Einwaagen 12,3 mg Probenmasse in Normkapseln. Die IR-spektroskopische Ermittlung der Polymerzusammensetzung erfolgte gemäß ASTM D 3900. Die Bestimmung der intrinsischen Viskosität erfolgte in einem Ubbelohde-Kapillarviskosimeter (Mehrpunktmessung bei drei Konzentrationen in o-Dichlorbenzol, Lösezeit: 6 h bei 140 °C).

### Abkürzungen:

- THF: Tetrahydrofuran
- RT: Raumtemperatur
- HV: Hochvakuum
- MAO: Methylaluminoxan
- TIBA: Triisobutylaluminium
- dH: Schmelzenthalpie (DSC-Messung)
- Tg: Glastemperatur (DSC-Messung)

### Beispiel 1

### Reaktion von 6,6-Diphenylfulven mit TiCl₄ · 2 THF in Gegenwart von Magnesium

167 mg (0,5 mmol) TiCl₄ · 2 THF und 115,1 mg (0,5 mmol) 6,6-Diphenylfulven wurden in 10 ml THF gelöst und mit 12,16 mg (0,5 mmol ) Magnesium versetzt. Man ließ über Nacht bei RT rühren, so dass das Magnesium vollständig verbraucht wurde. Die resultierende dunkelgrüne Lösung wurde mit 10 ml THF verdünnt. Es entstand eine Lösung mit einem Gehalt von 25 µmol Titan / ml.

### Beispiel 2

### Umsetzung des Reaktionsproduktes aus Beispiel 1 mit 2,6-Di-tert.-butyl-4-methylphenol

4 ml der Lösung aus Beispiel 1 (0,1 mmol Titan) wurden mit einer Lösung von 22,0 mg (0,1 mmol) 2,6-Di-tert.-butyl-4-methylphenol in 2 ml THF versetzt und 60 Minuten bei RT gerührt. Anschließend wurde das Lösungsmittel abkondensiert, der zurückgebliebene Rückstand im HV getrocknet und mit 20 ml Toluol versetzt. Man erhielt eine Suspension mit einem Gehalt von 5 µmol Titan/ml.

### Beispiel 3

### Polymerisation von Ethylen

In einen 250 ml Glasreaktor wurden 100 ml Toluol und 7 ml einer 10 %-igen Lösung von Methylalumoxan (MAO) in Toluol vorgelegt und mit 2 ml der Suspension aus Beispiel 2 (10 µmol Titan) versetzt. Die resultierende Lösung wurde 10 Minuten bei RT gerührt und dann auf 40 °C erwärmt. Anschließend wurde mit einem Gaseinleitungsrohr kontinuierlich bei 1,1 bar Druck Ethylen in die Lösung eingeleitet. Bei einer Temperatur von 40 °C und einem Ethylendruck von 1,1 bar wurde die Reaktion nach 10 min Polymerisationsdauer durch Zugabe von 50 ml Methanol abgestoppt, das entstandene Polymer abfiltriert, mit Methanol gewaschen und im Vakuumtrockenschrank getrocknet. Es wurden 0,7 g Polyethylen erhalten.

### Beispiel 4

### Umsetzung des Reaktionsproduktes aus Beispiel 1 mit 3,5-Bis(trifluormethyl)phenol

4 ml der Lösung aus Beispiel 1 (0,1 mmol Titan) wurden mit einer Löung von 23 mg (0,1 mmol) 3,5-Bis(trifluormethyl)phenol in 2 ml THF versetzt und 60 Minuten bei RT gerührt. Anschließend wurde das Lösungsmittel abkondensiert, der zurückgebliebene Rückstand im HV getrocknet und mit 20 ml Toluol versetzt. Man erhielt eine Suspension mit einem Gehalt von 5 µmol Titan / ml.

### Beispiel 5

### Polymerisation von Ethylen

Die Polymerisation aus Beispiel 3 wurde wiederholt, mit dem Unterschied, dass 2 ml der Suspension aus Beispiel 4 (10 µmol Titan), anstelle der Suspension aus Beispiel 2 eingesetzt wurden. Man erhielt 1,5 g Polyethylen.

### Beispiel 6

### Umsetzung des Reaktionsproduktes aus Beispiel 1 mit Pentafluorphenol

4 ml der Lösung aus Beispiel 1 (0,1 mmol Titan) wurden mit einer Löung von 18,4 mg (0,1 mmol) Pentafluorphenol in 2 ml THF versetzt und 75 min bei RT gerührt. Anschließend wurde das Lösungsmittel abkondensiert, der zurückgebliebene Rückstand im HV getrocknet und mit 20 ml Toluol versetzt. Man erhielt eine Suspension mit einem Gehalt von 5 µmol Titan / ml.

### Beispiel 7

### Polymerisation von Ethylen

Die Polymerisation aus Beispiel 3 wurde wiederholt, mit dem Unterschied, dass 2 ml der Suspension aus Beispiel 6 (10 µmol Titan), anstelle der Suspension aus Beispiel 2 eingesetzt wurden. Man erhielt 1,2 g Polyethylen.

### Beispiel 8

### Umsetzung des Reaktionsproduktes aus Beispiel 1 mit 2,6-Diisopropylphenol

4 ml der Lösung aus Beispiel 1 (0,1 mmol Titan) wurden mit einer Löung von 17,8 mg (0,1 mmol) 2,6-Diisopropylphenol in 2 ml THF versetzt und 60 Minuten bei RT gerührt. Anschließend wurde das Lösungsmittel abkondensiert, der zurückgebliebene Rückstand im HV getrocknet und mit 20 ml Toluol versetzt. Man erhielt eine Suspension mit einem Gehalt von 5 µmol Titan / ml.

### Beispiel 9

### Polymerisation von Ethylen

Die Polymerisation aus Beispiel 3 wurde wiederholt, mit dem Unterschied, dass 2 ml der Suspension aus Beispiel 8 (10 µmol Titan), anstelle der Suspension aus Beispiel 2 eingesetzt wurden. Man erhielt 1,7 g Polyethylen.

### Beispiel 10

### Polymerisation von Ethylen

Die Polymerisation aus Beispiel 9 wurde wiederholt, mit dem Unterschied, dass 1 ml einer 1 molaren TIBA-Lösung in Toluol anstelle von MAO eingesetzt wurden. Die Polymerisationstemperatur betrug 60 °C. Man erhielt 2,4 g Polyethylen.

### Beispiel 11

### Reaktion von 6,6-Dimethylfulven mit TiCl₄ · 2 THF in Gegenwart von Magnesium und anschließende Umsetzung mit 2,6-Diisopropylphenol

334 mg (1 mmol) TiCl₄ 2 THF und 106 mg (1 mmol) 6,6-Dimethylfulven wurden in 10 ml THF gelöst und mit 24,3 mg (1 mmol) Magnesium versetzt. Man ließ über Nacht bei RT rühren, so dass das Magnesium vollständig verbraucht wurde. Anschließend wurde eine Lösung von 178 mg (1 mmol) 2,6-Diisopropylphenol in 2 ml THF zugetropft und 2 Stunden bei RT gerührt. Das Lösungsmittel wurde abkondensiert und der zurückgebliebene Rückstand mit 40 ml Toluol versetzt. Es entstand eine Suspension mit einem Gehalt von 25 µmol Titan / ml.

### Beispiel 12

### Polymerisation von Ethylen

In einen 250 ml Glasreaktor wurden 100 ml Toluol und 0,25 ml Triisobutylaluminium (TIBA) vorgelegt und mit 0,4 ml der Suspension aus Beispiel 11 (10 µmol Titan) versetzt. Die resultierende Lösung wurde auf 60 °C erwärmt. Anschließend wurde mit einem Gaseinleitungsrohr kontinuierlich bei 1,1 bar Druck Ethylen in die Lösung eingeleitet. Bei einer Temperatur von 60 °C und einem Ethylendruck von 1,1 bar wurde die Reaktion nach 10 min Polymerisationsdauer durch Zugabe von 50 ml Methanol abgestoppt, das entstandene Polymer abfiltriert, mit Methanol gewaschen und im Vakuumtrockenschrank getrocknet. Es wurden 0,6 g Polyethylen erhalten.

### Beispiel 13

### Reaktion von 6,6-Diphenylfulven mit TiCl₄ · 2 THF in Gegenwart von Magnesium und anschließende Umsetzung mit 2,6-Diisopropylphenol

334 mg (1 mmol) TiCl₄ · 2 THF und 230 mg (1 mmol) 6,6-Diphenylfulven wurden in 10 ml THF gelöst und mit 24,3 mg (1 mmol ) Magnesium versetzt. Man ließ 2 Stunden bei RT rühren, so dass das Magnesium vollständig verbraucht wurde. Anschließend wurde eine Lösung von 178 mg (1 mmol) 2,6-Diisopropylphenol in 2 ml THF zugetropft und 2 Stunden bei RT gerührt. Das Lösungsmittel wurde abkondensiert und der zurückgebliebene Rückstand mit 40 ml Toluol versetzt. Es resultierte eine Suspension mit einem Gehalt von 25 µmol Titan / ml.

### Beispiel 14

### Polymerisation von Ethylen

In einen 1,4-1-Stahl-Autoklaven wurden 500 ml n-Hexan und 1 ml TIBA vorgelegt und auf 80°C temperiert. Anschließend wurde Ethylen zudosiert, bis der Reaktorinnendruck auf 10 bar anstieg. Voraktivierung des Katalysators: 0,4 ml der Suspension aus Beispiel 13 wurde in eine Lösung von 0,25 ml TIBA in 5 ml Hexan gegeben und 10 Minuten bei RT gerührt. Durch Zugabe der voraktivierten Katalysatorlösung (10 µmol Titan) wurde die Polymerisation gestartet. Nach einer Polymerisationsdauer von 40 Minuten bei 80°C und 10 bar wurde der Autoklav entspannt, die Polymerisation mit einer 1 %-igen HCl-Lösung in Methanol abgestoppt und 1 h gerührt. Das so erhaltene Polymer wurde abfiltriert, mit Methanol gewaschen, isoliert und 20 h bei 60 °C im Vakuum getrocknet. Man erhielt 45,5 g hochkristallines Polyethylen. Der DSC-Schmelzpunkt der 1. Aufheizung betrug 142,1 °C (dH = 220,4 J/g), der der 2. Aufheizung 135,4 °C (dH = 166 J/g).

### Beispiel 15

### Coplymerisation von Ethylen und 1-Hexen

Die Polymerisation aus Beispiel 14 wurde wiederholt, mit dem Unterschied, dass zusätzlich 10 ml 1-Hexen in den Autoklaven vorgelegt wurden. Die Polymerisationsdauer betrug 30 Minuten bei 80 °C und 10 bar. Es wurden 43,3 g eines Ethylen/1-Hexen Copolymeren erhalten.

### Beispiel 16

### Copolymerisation von Ethylen und Propylen

In einen 1,4-1-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 1 ml TIBA vorgelegt. Die Innentemperatur wurde mit einem Thermostaten auf 60 °C eingestellt. Anschließend wurden 12 g Ethylen und 27 g Propylen zudosiert (Massenverhältnis 3:7). Durch Zugabe von 0,2 ml der Suspension aus Beispiel 13 (5 µmol Titan) wurde die Polymerisation gestartet. In Semibatch-Fahrweise wurde Ethylen und Propylen im Massenverhältnis von 3:7 kontinuierlich zudosiert, so dass der Innendruck bei 60 °C konstant 7 bar betrug. Nach 30 Minuten Polymerisationsdauer wurde der Autoklav entspannt und die hochviskose Reaktionslösung mit 1 Liter Toluol verdünnt, in 3 Liter Methanol unter Rühren eingetragen und 2 Stunden nachgerührt. Das ausgefallene Polymer wurde mit Methanol gewaschen, isoliert und 20 h bei 60 °C im Vakuum getrocknet, wobei 24,3 g eines Ethylen/Propylen-Copolymeren erhalten wurden. Die IR-Untersuchung ergab eine Zusammensetzung von 80,2 Gew.-% Ethylen und 19,9 Gew.-% Propylen. Die intrinsische Viskosität in o-Dichlorbenzol betrug 5,94 dl/g. Mit der DSC-Methode wurde ein Tg von -48,0 °C (2. Aufheizung) ermittelt.

### Beispiel 17

### Copolymerisation von Ethylen und Propylen

Die Polymerisation aus Beispiel 16 wurde wiederholt, mit dem Unterschied, dass Ethylen und Propylen im Massenverhältnis von 1:4 zudosiert wurden. Nach 30 Minuten Polymerisationsdauer wurden 18,3 g eines Ethylen/Propylen-Copolymeren erhalten. Die IR-Untersuchung ergab eine Zusammensetzung von 74,8 Gew.-% Ethylen und 25,2 Gew.-% Propylen. Die intrinsische Viskosität in o-Dichlorbenzol betrug 3,6 dl/g. Mit der DSC-Methode wurde ein Tg von -47,5 °C (2. Aufheizung) ermittelt.

### Beispiel 18

### Copolymerisation von Ethylen und Propylen

Die Polymerisation aus Beispiel 16 wurde wiederholt, mit dem Unterschied, dass Ethylen und Propylen im Massenverhältnis von 1:9 zudosiert wurden. Nach 20 Minuten Polymerisationsdauer wurden 11,0 g eines Ethylen/Propylen-Copolymeren erhalten. Die IR-Untersuchung ergab eine Zusammensetzung von 54,7 Gew.-% Ethylen und 45,3 Gew.-% Propylen. Die intrinsische Viskosität in o-Dichlorbenzol betrug 3,2 dl/g. Mit der DSC-Methode wurde ein Tg von -55,0 °C (2. Aufheizung) ermittelt.

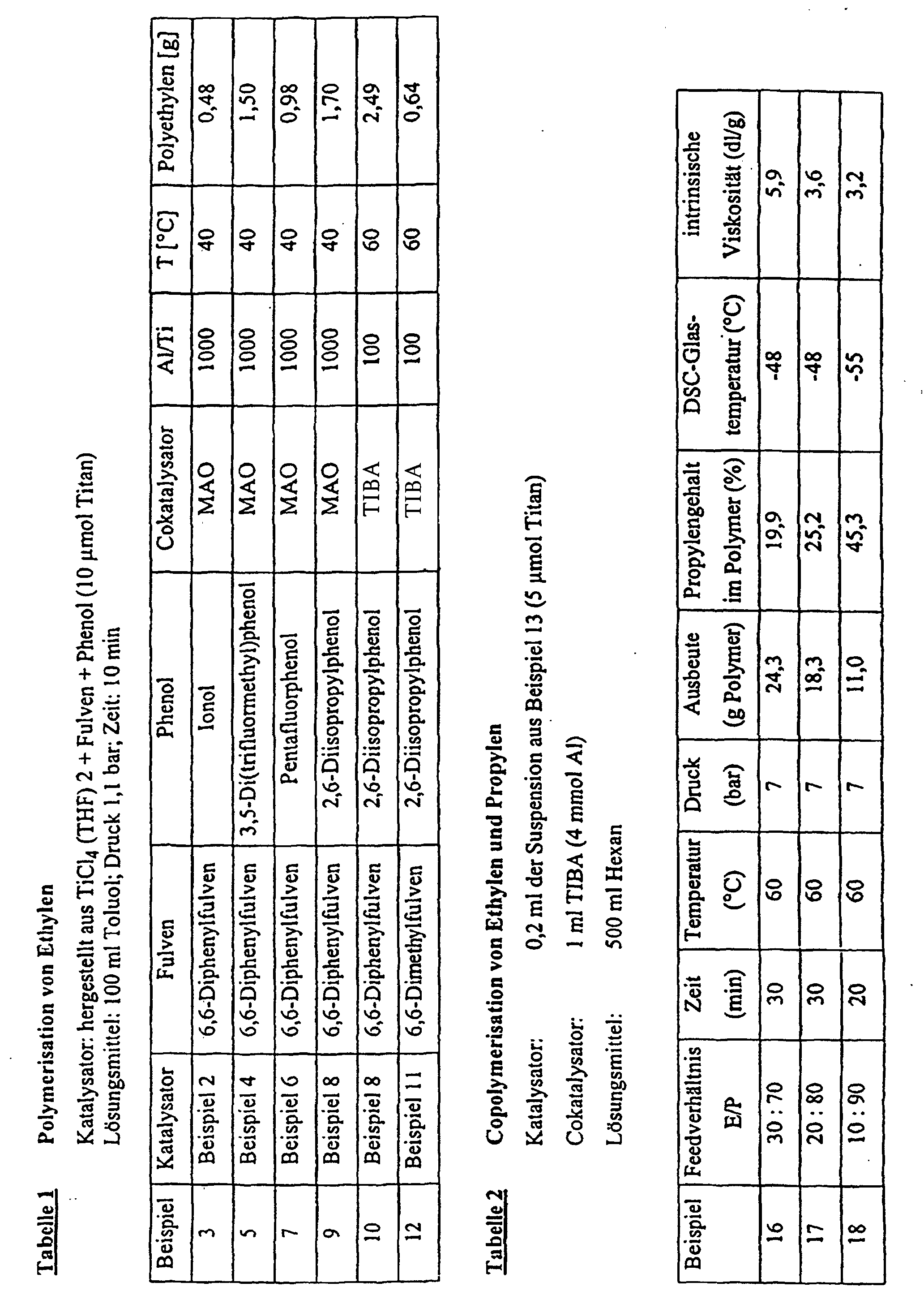

## Patentansprüche

1. Zusammcnsetzung, herstellbar durch Umsetzung
a) einer Fulvenverbindung der Formel (I) 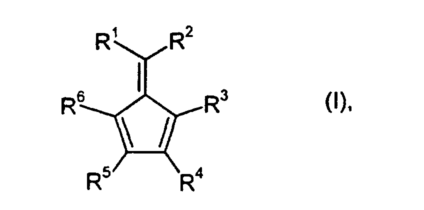 wobei
R¹, R², R³, R⁴, R⁵, R⁶ gleich oder verschieden sind und stehen für Wasserstoff, Halogen, eine Cyanogruppe, eine C₁ - bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe, eine C₆- bis C₂₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, eine C₂ bis C₁₀-Alkinylgruppe, eine durch C₁-C₁₀-Kohlenwasserstoffreste substituierte Silylgruppe, eine durch einen C₁-C₁₀-Kohlenwasserstoffrest substituierte Sulfidgruppe, eine gegebenenfalls durch C₁-C₂₀-Kohlenwasserstoffreste substituierte Aminogruppe,
oder
R¹, R², R³, R⁴, R⁵, R⁶ jeweils zusammen mit den sie verbindenden Atomen ein oder mehrere aliphatische oder aromatische Ringsysteme bilden, welche ein oder mehrere Heteroatome, ausgewählt aus der Gruppe (O, N, S) enthalten können und 5 bis 10 Kohlenstoffatome aufweisen,
mit
b) einer Übergangsmetallverbindung der Formel (II)
Aₘ(X¹)ₛLₙM¹ (II),
wobei
M¹ ein Metall aus der Gruppe 3, 4, 5, 6 oder der Lanthaniden oder der Actiniden des Periodensystems der Elemente nach IUPAC ist,
A ein gegebenenfalls ein- oder mehrfach verbrückter anionischer Ligand bedeutet,
X¹ ein Wasserstoffatom, eine C₁- bis C₁₀-Alkylgruppe, eine C₁-bis C₁₀-Alkoxygruppe, eine C₆- bis C₁₀-Arylgruppe, eine C₆bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, eine C₁- bis C₁₀-Kohlenwasserstoffreste substituierte Silylgruppe, ein Halogenatom oder ein Amid der Formel NR⁷₂ bedeutet,
R⁷ steht für Wasserstoff, eine C₁- bis C₂₀-Alkylgruppe, eine C₆- bis C₂₀-Arylgruppe; eine C₇- bis C₄₀-Arylalkylgruppe, eine C₇- bis C₄₀-Alkylarylgruppe, eine durch C₁-C₁₀-Kohlemvasserstoffreste substituierte Silylgruppe, eine gegebenenfalls durch C₁-C₂₀-Kohlenwasserstoffreste substituierte Aminogruppe,
L ein Neutralligand bedeutet,
s die Zahl 2, 3, 4, 5 oder 6 bedeutet,
m die Zahlen 0, 1, 2, 3 oder 4 darstellt, die sich aus der Valenz und dem Bindungszustand von M¹ ergibt, sowie
n eine Zahl von 0 bis 10 ist,
in Gegenwart eines Reduktionsmittels,
und anschließender Umsetzung des Produktes mit
c) einer Verbindung der Formel (III)
R⁸ YH (III),
wobei
R⁸ eine C₁- bis C₃₀-Alkylgruppe, eine gegebenenfalls substituierte C₆- bis C₂₀-Arylgruppe, eine C₇- bis C₄₀-Arylalkylgruppe, eine C₇- bis C₄₀-Alkylarylgruppe, eine durch C₁-C₁₀-Kohlenwasserstoffreste substituierte Silylgruppe oder Wasserstoff bedeutet,
Y ein Sauerstoffatom, ein Schwefelatom, eine Gruppe der Formel NR⁹, eine Gruppe der Formel PR⁹, oder eine Gruppe der Formel C(R¹⁰)=N bedeutet, wobei R⁹ und R¹⁰ die gleiche Bedeutung wie R⁸ haben.

2. Zusammensetzung nach Anspruch 1, wobei M¹ ein Metall aus der Gruppe Titan, Zirkonium, Hafnium, Vanadium, Niob, Tantal und Chrom ist.

3. Zusammensetzung nach einem oder mehreren der Ansprüche 1 bis 2, wobei Y ein Sauerstoffatom bedeutet.

4. Zusammensetzung nach einem oder mehreren der Ansprüche 1 bis 3, wobei das Reduktionsmittel Lithium, Natriumamalgam, Magnesium, oder n-Butyllithium ist.

5. Verfahren zur Herstellung einer Zusammensetzung nach einem oder mehreren der Ansprüche 1 bis 4, **dadurch gekennzeichnet, dass** die Komponenten a), b) und c) in festgelegter Reihenfolge umgesetzt werden, wobei zuerst die Komponenten a) und b) miteinander zur Reaktion gebracht werden und dann mit c) umgesetzt wird.

6. Verfahren nach Anspruch 5, **dadurch gekennzeichnet, dass** das molare Verhältnis von Komponente a) zu Komponente b) im Bereich von 100:1 bis 0,1:1 liegt.

7. Verfahren nach einem oder mehreren der Ansprüche 5 bis 6, **dadurch gekennzeichnet, dass** das molare Verhältnis von Komponente b) zu Komponente c) im Bereich von 10:1 bis 0,5:1 liegt.

8. Zusammensetzung, herstellbar durch Umsetzung des Katalysatorsystems nach einem oder mehreren der Ansprüche 1 bis 4 mit einer Verbindung der Formel (IV) 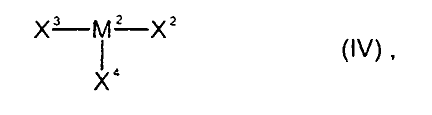 wobei
M² ein Element aus der Gruppe 13 des Periodensystems der Elemente nach IUPAC ist und
X², X³, X⁴ gleich oder verschieden sind und stehen für Wasserstoff, Halogen, eine C₁- bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe, eine C₆- bis C₂₀-Arylgruppe, eine C₆- bis C₂₀-Aryloxygruppe, eine C₇- bis C₄₀-Arylalkylgruppe, oder eine C₇- bis C₄₀-Alkylarylgruppe.

9. Verwendung der Zusammensetzung nach einem oder mehreren der Ansprüche 1 bis 4, gegebenenfalls in Kombination mit einem Co-Katalysator zur Polymerisation von Olefinen und/oder Dienen.

10. Verwendung der Zusammensetzung nach Anspruch 8 zur Polymerisation von Olefinen und/oder Dienen.

11. Polymerisate, herstellbar in einem Polymersationsverfahren in Gegenwart einer Zusammensetzung nach einem oder mehreren der Ansprüche 1 bis 4 und/oder Anspruch 8.

## Claims

1. Composition which can be prepared by reacting
a) a fulvene compound of the formula (I) 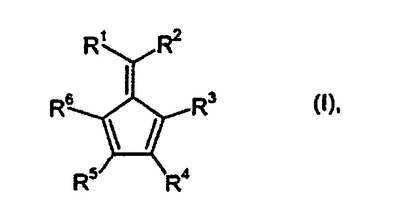 where
R¹, R², R³, R⁴, R⁵, R⁶ are identical or different and are each hydrogen, halogen, a cyano group, a C₁-C₂₀-alkyl group, a C₁-C₁₀-fluoroalkyl group, a C₆-C₁₀-fluoroaryl group, a C₁-C₁₀-alkoxy group, a C₆-C₂₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group, a C₂-C₁₀-alkynyl group, a silyl group bearing C₁-C₁₀-hydrocarbon radicals as substituents, a sulphide group bearing a C₁-C₁₀-hydrocarbon radical as substituent, an amino group which may be unsubstituted or bear C₁-C₂₀-hydrocarbon radicals as substituents,
or
R¹, R², R³, R⁴, R⁵, R⁶ in each case together with the atoms connecting them form one or more aliphatic or aromatic ring systems which may contain one or more heteroatoms selected from the group consisting of O, N, S and have from 5 to 10 carbon atoms,
with
b) a transition metal compound of the formula (II)
Aₘ(X¹)ₛLₙM¹ (II)
where
M¹ is a metal of group 3, 4, 5, 6 or the lanthanides or the actinides of the IUPAC Periodic Table of the Elements,
A is an anionic ligand which may be unbridged or have one or more bridges,
X¹ is a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group, a silyl group bearing C₁-C₁₀-hydrocarbon radicals as substituents, a halogen atom or an amide of the formula NR⁷₂,
R⁷ is hydrogen, a C₁-C₂₀-alkyl group, a C₆-C₂₀-aryl group, a C₇-C₄₀-arylalkyl group, a C₇-C₄₀-alkylaryl group, a silyl group bearing C₁-C₁₀-hydrocarbon radicals as substituents, an amino group which may be unsubstituted or bear C₁-C₂₀-hydrocarbon radicals as substituents,
L is an uncharged ligand,
s is 2, 3, 4, 5 or 6,
m is 0, 1, 2, 3 or 4 and is determined by the valency and coordination number of M¹, and
n is from 0 to 10,
in the presence of a reducing agent,
and subsequently reacting the product with
c) a compound of the formula (III)
R⁸YH (III)
where
R⁸ is a C₁-C₃₀-alkyl group, a substituted or unsubstituted C₆-C₂₀-aryl group, a C₇-C₄₀-arylalkyl group, a C₇-C₄₀-alkylaryl group, a silyl group bearing C₁-C₁₀-hydrocarbon radicals as substituents or hydrogen,
Y is an oxygen atom, a sulphur atom, a group of the formula NR⁹, a group of the formula PR⁹ or a group of the formula C(R¹⁰)=N, where R⁹ and R¹⁰ are as defined for R⁸.

2. Composition according to Claim 1, wherein M¹ is a metal selected from the group consisting of titanium, zirconium, hafnium, vanadium, niobium, tantalum and chromium.

3. Composition according to one or both of Claims 1 to 2, wherein Y is an oxygen atom.

4. Composition according to one or more of Claims 1 to 3, wherein the reducing agent is lithium, sodium amalgam, magnesium or n-butyllithium.

5. Process for preparing a composition according to one or more of Claims 1 to 4, **characterized in that** the components a), b) and c) are reacted in a fixed order, with the components a) and b) firstly being reacted with one another and the product then being reacted with c).

6. Process according to Claim 5, **characterized in that** the molar ratio of component a) to component b) is in the range from 100:1 to 0.1:1.

7. Process according to one or both of Claims 5 to 6, **characterized in that** the molar ratio of component b) to component c) is in the range from 10:1 to 0.5:1.

8. Composition which can be prepared by reacting the catalyst system according to one or more of Claims 1 to 4 with a compound of the formula (IV) 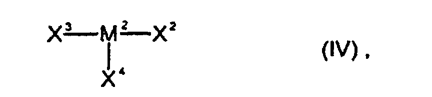 where
M² is an element of group 13 of the IUPAC Periodic Table of the Elements and
X², X³, X⁴ are identical or different and are each hydrogen, halogen, a C₁-C₂₀-alkyl group, a C₁-C₁₀-fluoroalkyl group, a C₆-C₁₀-fluoroaryl group, a C₁-C₁₀-alkoxy group, a C₆-C₂₀-aryl group, a C₆-C₂₀-aryloxy group, a C₇-C₄₀-arylalkyl group or a C₇-C₄₀-alkylaryl group.

9. Use of the composition according to one or more of Claims 1 to 4, if desired in combination with a cocatalyst, for the polymerization of olefins and/or dienes.

10. Use of the composition according to Claim 8 for the polymerization of olefins and/or dienes.

11. Polymers which can be prepared in a polymerization process in the presence of a composition according to one or more of Claims 1 to 4 and/or Claim 8.

## Revendications

1. Composition préparée par réaction de
a) un fulvène de formule (I) 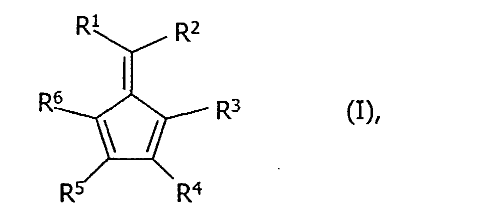 dans laquelle
R¹, R², R³, R⁴, R⁵, R⁶, ayant des significations identiques ou différentes, représentent chacun l'hydrogène, un halogène, un groupe cyano, un groupe alkyle en C₁-C₂₀, un groupe fluoralkyle en C₁-C₁₀, un groupe fluoaryle en C₆-C₁₀, un groupe alcoxy en C₁-C₁₀, un groupe aryle en C₆-C₂₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀, un groupe alcynyle en C₂-C₁₀, un groupe silyle substitué par des radicaux hydrocarbonés en C₁-C₁₀, un groupe sulfure substitué par un radical hydrocarboné en C₁-C₁₀, un groupe amino éventuellement substitué par des radicaux hydrocarbonés en C₁-C₂₀,
ou bien
R¹, R², R³, R⁴, R⁵, R⁶ forment ensemble et avec les atomes qui les relient un ou plusieurs systèmes cycliques aliphatiques ou aromatiques qui peuvent contenir un ou plusieurs hétéroatomes choisis parmi O, N et S et contiennent de 5 à 10 atomes de carbone,
avec
b) un dérivé de métal de transition de formule (II)
Aₘ(X¹)ₛLₙM¹ (II),
dans laquelle
M¹ représente un métal du groupe 3, 4, 5 ou 6, ou des lanthanides, ou des actinides de la Classification Périodique des éléments de l'IUPAC,
A représente un ligand anionique éventuellement relié par un ou plusieurs ponts,
X¹ représente un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀, un groupe silyle substitué par des radicaux hydrocarbonés en C₁-C₁₀, un atome d'halogène ou un amide de formule NR⁷₂, dans laquelle
R⁷ représente l'hydrogène, un groupe alkyle en C₁-C₂₀, un groupe aryle en C₆-C₂₀, un groupe arylalkyle en C₇-C₄₀, un groupe alkylaryle en C₇-C₄₀, un groupe silyle substitué par des radicaux hydrocarbonés en C₁-C₁₀, un groupe amino éventuellement substitué par des radicaux hydrocarbonés en C₁-C₂₀,
L représente un ligand neutre,
s est égal à 2, 3, 4, 5 ou 6,
m est égal à 0, 1, 2, 3 ou 4 selon la valence et de l'état de liaison de M¹, et
n est un nombre allant de 0 à 10,
en présence d'un agent réducteur,
suivie de la réaction du produit obtenu avec
c) un composé de formule (III)
R⁸YH (III),
dans laquelle
R⁸ représente un groupe alkyle en C₁-C₃₀, un groupe aryle éventuellement substitué en C₆-C₂₀, un groupe arylalkyle en C₇-C₄₀, un groupe alkylaryle en C₇-C₄₀, un groupe silyle substitué par des radicaux hydrocarbonés en C₁-C₁₀, ou l'hydrogène,
Y représente un atome d'oxygène, un atome de soufre, un groupe de formule NR⁹, un groupe de formule PR⁹ ou un groupe de formule C(R¹⁰)=N, R⁹ et R¹⁰ ayant les significations indiquées pour R⁸.

2. Composition selon la revendication 1, dans laquelle M1 représente un métal du groupe du titane, du zirconium, du hafnium, du vanadium, du niobium, du tantale et du chrome.

3. Composition selon une ou plusieurs des revendications 1 à 2, pour laquelle Y représente un atome d'oxygène.

4. Composition selon une ou plusieurs des revendications 1 à 3, pour laquelle l'agent réducteur est le lithium, l'amalgame de sodium, le magnésium ou le n-butyllithium.

5. Procédé pour la préparation d'une composition selon une ou plusieurs des revendications 1 à 4, **caractérisé en ce que** l'on fait réagir les composants a), b) et c) dans l'ordre spécifié, à savoir d'abord les composants a) et b) entre eux, puis avec c).

6. Procédé selon la revendication 5, **caractérisé en ce que** le rapport molaire entre le composant a) et le composant b) se situe dans l'intervalle de 100:1 à 0,1:1.

7. Procédé selon une ou plusieurs des revendications 5 à 6, **caractérisé en ce que** le rapport molaire entre le composant b) et le composant c) se situe dans l'intervalle de 10:1 à 0,5:1.

8. Composition préparée par réaction du système catalyseur selon une ou plusieurs des revendications 1 à 4 avec un composé de formule (IV) 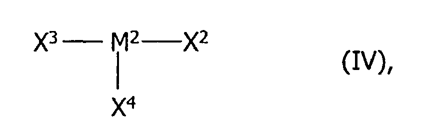 dans laquelle
M² représente un élément du groupe 13 de la Classification Périodique des éléments selon l'IUPAC et
X², X³, X⁴, ayant des significations identiques ou différentes, représentent chacun l'hydrogène, un halogène, un groupe alkyle en C₁-C₂₀, un groupe fluoralkyle en C₁-C₁₀, un groupe fluoaryle en C₆-C₁₀, un groupe alcoxy en C₁-C₁₀, un groupe aryle en C₆-C₂₀, un groupe aryloxy en C₆-C₂₀, un groupe arylalkyle en C₇-C₄₀ ou un groupe alkylaryle en C₇-C₄₀.

9. Utilisation de la composition selon une ou plusieurs des revendications 1 à 4, le cas échéant en combinaison avec un catalyseur auxiliaire, pour la polymérisation d'oléfines et/ou de diènes.

10. Utilisation de la composition selon la revendication 8, pour la polymérisation d'oléfines et/ou de diènes.

11. Polymères préparés dans une opération de polymérisation en présence d'une composition selon une ou plusieurs des revendications 1 à 4 et/ou 8.
